# EUROPÄISCHE PATENTSCHRIFT

(11) **EP 1 454 818 B1**
(45) Veröffentlichungstag und Bekanntmachung des Hinweises auf die Patenterteilung: **30.08.2006**
(21) Anmeldenummer: 04004788.8
(22) Anmeldetag: 02.03.2004
(51) Int. Cl.: B62D 25/02, B62D 27/02, B21D 39/03

(54) **Metallblech-Formteil und Verfahren zur Herstellung eines Metallblech-Formteils**
Metal panel and method of manufacturing the same
Panneau métallique en tôle et son procédé de fabrication

(30) Priorität: 04.03.2003 DE 10309634
(43) Veröffentlichungstag der Anmeldung: 08.09.2004
(73) Patentinhaber: AUDI AG, 85045 Ingolstadt (DE)
(72) Erfinder: Gerbrand, Jürgen, 71737 Kirchberg (DE); Leonhardt, Ulrich, 71732 Tamm (DE); Rempel, Reglindis, Dr., 74360 Ilsfeld (DE); Müller, Steffen, 71364 Winnenden (DE)
(74) Vertreter: Patzelt, Heike Anna Maria

(56) Entgegenhaltungen:
- DE-A- 4 444 817
- US-A- 4 471 519
- US-A- 5 860 694

## Beschreibung

**Die Erfindung betrifft** ein Metallblech-Formteil gemäss dem Oberbegriff des Patentanspruchs 1 und ein Verfahren zur Herstellung von Metallblech-Formteilen gemäss dem Oberbegriff des Patentanspruchs 6 (siehe z.B. US-A-5 860 694).

**Metallblech-Formteile** werden in Abhängigkeit von ihrer Geometrie und ihrer Materialbeschaffenheit einstückig oder mehrstückig aufgebaut.

**Nachteilig** bei dem einstückigen Aufbau ist es, dass der Geometrie des Formteils Grenzen gesetzt sind. Insbesondere kantige Konturen können nur schwer umgesetzt werden.

Bei **mehrstückig aufgebauten Metallblech-Formteilen** können verschiedene Verbindungstechniken Verwendung finden. Hierzu zählt das Löten, Schweißen, Kleben und Nieten. In Abhängigkeit des verwendeten Metalls oder der Metallegierung werden verschiedene Verbindungstechniken bevorzugt. Zum Beispiel bei Stahl das Löten, bei Aluminium das Schweißen oder Nieten und bei Materialmixaufbauten zwischen Metall und Kunststoff das Kleben.

**Nachteilig** bei diesen zusammengesetzten Formteilen ist es, insbesondere beim Schweißen, Löten und Nieten, dass die Verbindungsstellen sichtbar sind und auch durch eine aufwendige Nachbehandlung an den Verbindungsstellen der mehrstückige Aufbau eines solchen Formteiles ersichtlich ist.

**Aufgabe der Erfindung** ist es, ein Metallblech-Formteil aufzuzeigen, das aus mehreren Einzelteilen besteht, das eine komplexe Geometrie, insbesondere eine kantige Formgebung aufweist und das aussieht als wäre es einstückig.

Diese Aufgabe wird durch ein Metallblech-Formteil mit den Merkmalendes Anspruchs 1 bzw. durch ein Verfahren mit den Merkmalen des Anspruchs 6 **gelöst**. Die Einzelteile weisen an ihren Verbindungsstellen einen Flansch auf, der auf der Rückseite des späteren Formteils ausgebildet ist. Die Flanschflächen zweier benachbarter kleinerer Metallblech-Formteile dienen als Verbindungsfläche. An diesen Verbindungsflächen werden die kleineren Formteile fest und dauerhaft miteinander verbunden. Diese feste Verbindung befindet sich auf der späteren nicht sichtbaren Innenseite. Der Spalt, der zwischen den beiden kleineren Formteilen im Flanschbereich von außen an der Außenseite sichtbar wäre wird mittels einer geeigneten Kleberkaschierung verdeckt. Der Kleber für eine solche Kaschierung sollte auf dem Metall haftend sein, witterungsresistent, lackierbar und nacharbeitbar sein, sodass nach der Nachbearbeitung und dem Lackieren die Außenfläche einstückig erscheint. Anspruch 5 betriff die Verwendung des Metallblech-Formteils gemäß Anspruch 1.

Der **Vorteil der Erfindung** ist es, dass Metallblech Formteile mit komplexen Geometrien aufgebaut werden können, insbesondere ein markanter kantiger Aufbau für Sportwagenkarosserien, die einen einstückigen homogenen Eindruck erwecken, die einen massiven metallenen Aufbau vorweisen und die kostengünstig in kleinen Stückzahlen hergestellt werden können.

**Vorteilhafte Weiterbildungen** ergeben sich aus den Unteransprüchen. In der Leichtbaukarosserie, insbesondere bei Aluminiumkarosserien erweist es sich als besonders vorteilhaft, wenn auf den flanschförmigen Verlängerungen eine Stumpfschweißung erfolgt, das heißt, die kleineren Formteile werden an der Stirnseite der flanschförmigen Verlängerung verschweißt. Danach werden sie auf der gegenüberliegenden Außenfläche klebekaschiert, so dass der Spalt zwischen den beiden kleineren Formteilen abgedeckt ist. Als Klebekaschierung eignet sich vor allem der Einsatz von 2-Komponenten-Epoxydharzklebern. Jedoch sind auch anderer Klebstoffsysteme wie z.B. Acrylatsysteme oder aber auch 1-Komponentenkleber einsetzbar. Eine weitere vorteilhafte Ausbildung ergibt sich, wenn die kleineren Formteile an ihren flanschförmigen Verlängerungen zusammengenietet werden, wobei der an der Außenseite befindliche Spalt gleichfalls z.B. mit einem Epoxydharzkleber kaschiert werden kann. Derartige zusammengesetzte Formteile finden Verwendung für Außenverkleidungen von Fahrzeugen insbesondere bei Aluminiumkarossen.

Das nachfolgende Ausführungsbeispiel soll anhand der Figuren 1 bis 3 näher beschrieben werden. Es zeigen:
- **Figur 1:**: Schnittdarstellung eines mehrstückigen Metallblech-Formteils
- **Figur 2:**: Einzelne kleinere Metallblech-Formteile zum Aufbau eines hinteren Seitenteils einer Karosserie
- **Figur 3:**: Komplexes einstückiges Seitenteil einer Karosserie

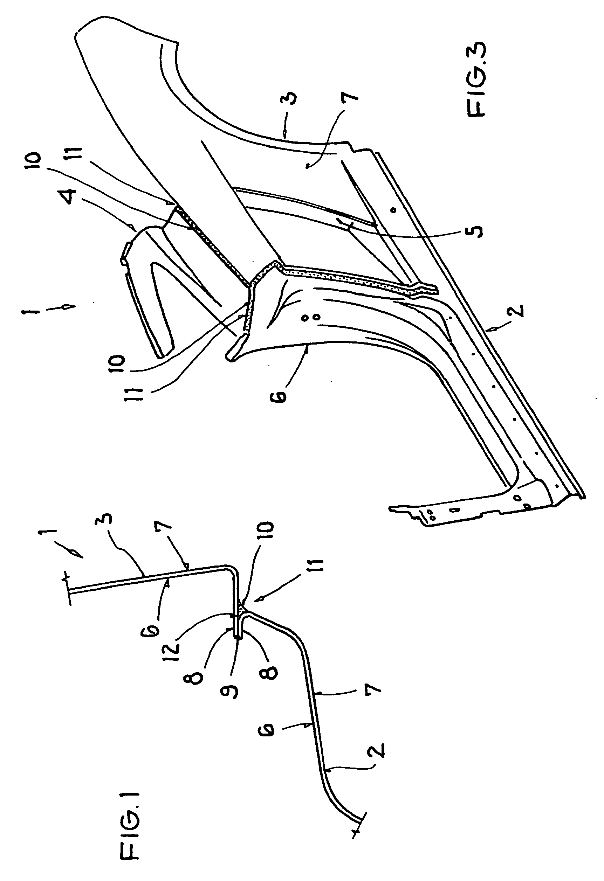

**Figur 1** zeigt einen Schnitt durch ein mehrstückig aufgebautes komplexes Metallblech-Formteil **1**. Bei dem hier dargestellten Formteil handelt es sich um das hintere Seitenteil **1** einer Karosserie. In dieser Schnittdarstellung sind zwei kleinere Metallblech-Formteile **2**, **3** des mehrstückigen Aufbaus dargestellt. Das Seitenteil 1 als komplexes größeres Metallblech-Formteil **1** weist eine später abgedeckte, nicht mehr sichtbare Innenseite **6** auf und eine später lackierte, sichtbare Außenseite **7** auf. An einem Ende des Türrahmens **2** ist eine flanschförmige Verlängerung **8** ausgebildet, die in Richtung der Innenseite **6** des Karosseriebauteils gerichtet ist. Die flanschförmige Verlängerung **8** des Türrahmens **2** steht in Verbindung mit der flanschförmigen Verlängerung **8** des hinteren Kotflügels **3**. Die flanschförmigen Verlängerungen **8** sind etwa 8 mm lang und sind auf der Innenseite **6** des Seitenteils **1** ausgebildet. Zwischen den flanschförmigen Verlängerungen **8** ist eine feste, dauerhafte Verbindung **9** angebracht. In diesem Ausführungsbeispiel wurde die feste Verbindung mittels MIG-Schweißen erzielt. Die Schweißnaht **9** ist stumpf auf die Flanschenden angebracht. Jedoch wäre auch eine Vernietung auf den Flanschflächen genauso zweckmäßig. Bei den hier dargestellten Karosserieteilen handelt es sich um Teile aus Aluminium oder aus einer Aluminiumlegierung. Die feste Verbindung **9** zwischen den beiden Karosserieteilen **2**, **3** ist auf der Innenseite **6** angeordnet, so dass sie von außen nicht sichtbar ist. Um den Spalt **12** zwischen dem Türrahmen **2** und dem Kotflügel **3** an der flanschförmigen Verlängerung **8** zu verdecken wird ein Kleber **10** aufgetragen. Bei dem Kleber handelt es sich um einen Epoxydharzkleber, der einerseits gut auf den Aluminiumflächen haftet, der so nachbearbeitet werden kann, dass die Übergangsflächen zwischen dem Aluminium und der Kleberkaschierung homogen ausgebildet werden können, der witterungsresistent ist, eine ähnliche Oberflächenstruktur wie das Aluminiumblech aufweist und der lackierbar ist. Dadurch kann nach dem Lackieren des Seitenteils **1** von außen der Eindruck erweckt werden, als wäre das Seitenteil **1** einstückig. Das Wesentliche bei diesem Ausführungsbeispiel besteht darin, dass die feste Verbindung 9 auf der Rückseite **6** des Formteils **1, 2, 3** angebracht ist während eine zweite Verbindung **10** an der Außenfläche **7** zur Kaschierung der festen Verbindung angeordnet ist.

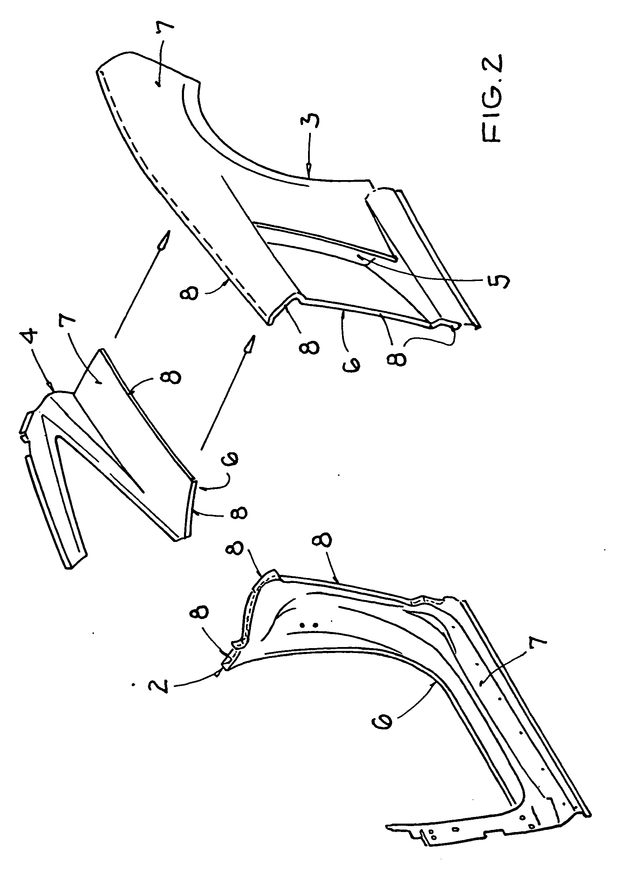

**Figur 2** zeigt die einzelnen kleineren Formteile **2, 3, 4** die zum Aufbau eines kompletten hinteren Seitenteils **1** benötigt werden. Der Türrahmen **2** besteht aus Aluminium und weist an seinen Verbindungsstellen **9** flanschartige Verlängerungen **8** auf, an denen er später mit den anderen Formteilen **3**, **4** verbunden wird. Die Länge der flanschartigen Verlängerung **8** beträgt ca. 8 mm. Es können jedoch auch andere Längen verwendet werden, die der jeweiligen Verbindungsart angepasst sind. Die flanschförmigen Verlängerungen **8** müssen so ausgebildet sein, dass die Hebelkräfte an den Einzelteilen nur eine geringe Wirkung erzielen können. An der seitlichen flanschförmigen Verlängerungen **8** des Türrahmens **2** wird später die flanschförmige Verlängerung **8** des hinteren Kotflügels **3** angelegt und verbunden. Der hintere Kotflügel **3** ist mehrstückig aufgebaut. Hier ist ein Lufteinlass **5** angebracht, der zusammen mit dem restlichen Kotflügel **3** gleichfalls eine flanschförmige Verlängerung **8** aufweist, die später mit der flanschförmigen Verlängerung **8** am Türrahmen **2** verbunden wird. An der Oberseite des Kotflügels befindet sich eine weitere flanschförmige Verlängerung **8**, die einen anderen Abknickwinkel gegenüber dem Kotflügel aufweist, wie die seitliche flanschförmige Verlängerung **8**. An der oberen flanschförmigen Verlängerung **8** des Kotflügels **3** wird die obere Abdeckung **4** angebracht, in dem die beiden flanschförmigen Verlängerungen **8** der oberen Abdeckung **4** und des hinteren Kotflügels **3** stumpf miteinander verschweißt werden.

**Figur 3** zeigt ein großes Metallblech-Formteil **1** mit einer komplexen Geometrie, das an seiner Außenfläche **7** mehrere Klebekaschierungen **10** aufweist. Diese Klebekaschierungen **10** bilden markante Designkanten **11** aus. Derartige Designkanten, die nach dem Lackieren den Eindruck erwecken, als seien Sie in das Formteil eingeprägt, sind mit einem herkömmlichen Verfahren gar nicht oder nur sehr aufwendig zu realisieren. Die festen Verbindungen **9** zwischen den einzelnen Teilen **2**, **3**, **4** befindet sich auf der Rückseite **6** an den flanschförmigen Verlängerungen, die von außen nicht gesehen werden können. Der Spalt an den flanschförmigen Verlängerungen ist durch den Kleber **10** abgedeckt. Der Kleber selbst dient nicht als feste Verbindung zwischen den Teilen, sondern nur als eine Art Spachtelmasse, die nach dem Lackieren unsichtbar ist und den Spalt zwischen den Einzelteilen verdeckt.

Mit einem solchen Aufbau lassen sich alle beliebigen Geometrien für die Karosserie-Außenhaut komplett aus Metallblech insbesondere für Aluminiumkarosserien gestalten. Derartige Formteile werden vor allem für Sportwagenkarosserien in Leichtbauweise benötigt. Jedoch sind auch andere Verwendungen solcher Formteile z. B. im Modellbau denkbar.

## Patentansprüche

1. Komplexes größeres Metallblech-Formteil (1) mit einer Innenseite (6) und einer Außenseite (7) bestehend aus
- mehreren kleineren Metallblech-Formteilen (2, 3, 4), die jeweils zumindest eine zur Innenseite (6) ausgebildete flanschförmige Verlängerung (8) aufweisen,
- wobei an- mindestens zwei benachbarten flanschförmigen Verlängerungen (8) von benachbarten kleineren Formteilen (2, 3, 4) eine feste Verbindung (9) ausgebildet ist, **dadurch gekennzeichnet daß**
- auf der Außenseite (7) ein Kleber (10) aufgebracht ist, der sich über der festen Verbindung (9) befindet, um den Spalt (12) zwischen den beiden benachbarten flanschförmigen Verlängerungen (8) der kleineren Formteile (2, 3, 4) abzudecken.

2. Größeres Formteil (1) nach Patentanspruch 1, **dadurch gekennzeichnet, dass**
die feste Verbindung (9) zwischen den kleineren Formteilen (2, 3, 4) eine Schweißverbindung ist, die stumpf auf den flanschförmigen Verlängerungen (8) angebracht ist.

3. Größeres Formteil (1) nach Patentanspruch 1, **dadurch gekennzeichnet, dass**
die feste Verbindung (9) zwischen den kleineren Formteilen (2, 3, 4) eine Nietverbindung ist.

4. Größeres Formteil (1) nach Patentanspruch 1, **dadurch gekennzeichnet, dass**
der Kleber (10) ein Epoxydharzkleber ist.

5. Verwendung eines größeren Metallblech-Formteils (1) nach Patentanspruch 1, in der Außenverkleidung eines Fahrzeugs.

6. Verfahren zur Herstellung größerer komplexer Metallblech-Formteile (1) aus kleineren, flanschförmige Verlängerungen (8) aufweisenden Metallblech-Formteilen (2, 3, 4), wobei die Formteile (1, 2, 3, 4) eine Innenseite (6) und eine Außenseite (7) aufweisen bei dem
- zuerst mindestens zwei der kleineren Formteile (2, 3, 4) an ihren auf die Innenseite (6) ragenden, flanschförmigen Verlängerungen (8) zusammengesetzt und dort fest miteinander verbunden werden, **dadurch gekennzeichnet daß**
- der Spalt (12) zwischen den benachbarten flanschförmigen Verlängerungen (8) auf der Außenseite (7) mit einer Klebemasse (10) abgedeckt wird.

## Claims

1. A complex, relatively large, shaped sheet-metal part (1) having an inside (6) and an outside (7) consisting of
- a plurality of relatively small, shaped sheet-metal parts (2, 3, 4), each of which has at least one flange-like extension (8) formed so as to extend towards the inside (6),
- in which case a strong joint (9) is formed on at least two adjoining flange-like extensions (8) of adjoining relatively small, shaped parts (2, 3, 4),
**characterized in that**
- an adhesive (10) is applied on the outside (7) and is located over the strong joint (9) so as to cover the gap (12) between the two adjoining flange-like extensions (8) of the relatively small, shaped parts (2, 3, 4).

2. A relatively large, shaped part (1) according to patent claim 1,
**characterized in that**
the strong joint (9) between the relatively small, shaped parts (2, 3, 4) is a welded joint taking the form of a butt weld on the flange-like extensions (8).

3. A relatively large, shaped part (1) according to patent claim 1,
**characterized in that**
the strong joint (9) between the relatively small, shaped parts (2, 3, 4) is a riveted joint.

4. A relatively large, shaped part (1) according to patent claim 1,
**characterized in that**
the adhesive (10) is an epoxy resin adhesive.

5. Use of a relatively large, shaped sheet-metal part (1) according to patent claim 1 in the external panelling of a vehicle.

6. A method of manufacturing complex, relatively large, shaped sheet-metal parts (1) from relatively small, shaped sheet-metal parts (2, 3, 4) having flange-like extensions (8), the shaped parts (1, 2, 3, 4) having an inside (6) and an outside (7), in which
- first of all at least two of the relatively small, shaped parts (2, 3, 4) are placed together at their flange-like extensions (8) projecting on the inside (6) and there are firmly joined together,
**characterized in that**
- the gap (12) between the adjoining flange-like extensions (8) is covered on the outside (7) with an adhesive substance (10).

## Revendications

1. Pièce usinée complexe de taille plus grande en tôle métallique (1) avec une face intérieure (6) et une face extérieure (7), constituée de :
- plusieurs pièces usinées de taille plus petite en tôle métallique (2, 3, 4) qui présentent respectivement au moins un prolongement (8) vers la face intérieure (6), réalisé en forme de bride ; et
- grâce à quoi une liaison solide (9) est réalisée sur au moins deux prolongements adjacents en forme de bride (8) de pièces usinées adjacentes de taille plus petite (2, 3, 4),
**caractérisée en ce que** :
- une colle (10) qui se trouve sur la liaison solide (9) est apposée sur la face extérieure (7) pour recouvrir l'interstice (12) entre les deux prolongements adjacents en forme de bride (8) des pièces usinées de taille plus petite (2, 3, 4).

2. Pièce usinée de taille plus grande (1) selon la revendication 1, **caractérisée en ce que** la liaison solide (9) entre les pièces usinées de taille plus petite (2, 3, 4) est une liaison soudée qui est appliquée en bord à bord sur les prolongements en forme de bride (8).

3. Pièce usinée de taille plus grande (1) selon la revendication 1, **caractérisée en ce que** la liaison solide (9) entre les pièces usinées de taille plus petite (2, 3, 4) est une liaison rivetée.

4. Pièce usinée de taille plus grande (1) selon la revendication 1, **caractérisée en ce que** la colle (10) est une colle de résine époxyde.

5. Utilisation d'une pièce usinée de taille plus grande en tôle métallique (1) selon la revendication 1, dans le revêtement extérieur d'un véhicule.

6. Procédé pour fabriquer des pièces usinées complexes de taille plus grande en tôle métallique (1) à partir de pièces usinées de taille plus petite en tôle métallique (2, 3, 4) comportant des prolongements (8) en forme de bride, dans lequel les pièces usinées (1, 2, 3, 4) présentent une face intérieure (6) et une face extérieure (7), dans lequel :
- au moins deux des pièces usinées de taille plus petite (2, 3, 4) sont assemblées sur leurs prolongements (8) en forme de bride et dépassant sur la face intérieure (6),
**caractérisé en ce que** :
- l'interstice (12) entre les prolongements adjacents en forme de bride (8) est recouvert sur la face extérieure (7) par une masse de colle (10).
